# EUROPEAN PATENT SPECIFICATION

(11) **EP 2 173 576 B1**
(45) Date of publication and mention of the grant of the patent: **10.11.2010**
(21) Application number: 08763447.3
(22) Date of filing: 02.07.2008
(51) Int. Cl.: B60C 19/00

(54) **TYREWARMER, IN PARTICULAR FOR TYRES TO BE USED IN MOTOR-CYCLING AND MOTOR-RACING**
REIFENWÄRMER, INSBESONDERE FÜR MOTORRAD- UND AUTORENNSPORTREIFEN
COUVERTURE CHAUFFANTE POUR PNEUS, EN PARTICULIER POUR PNEUS À UTILISER EN MOTOCYCLISME ET EN SPORT AUTOMOBILE

(30) Priority: 02.07.2007 IT PD20070225
(43) Date of publication of application: 14.04.2010
(73) Proprietor: O.R.V. Ovattificio Resinatura Valpadana S.p.a., 35010 Grantorto (Padova) (IT)
(72) Inventor: PERUZZO, Maurizio, I-36061 Bassano Del Grappa (Vicenza) (IT)
(74) Representative: Mitola, Marco
(86) International application number: PCT/IB2008/052658
(87) International publication number: WO 2009/004585

(56) References cited:
- EP-A- 1 130 947
- DE-A1- 4 019 447
- JP-U- 4 124 794

## Description

Field of application

The present finding relates to a tyrewarmer, in particular for tyres to be used in motor-cycling and motor-racing.

Prior art

Devices for warming tyres known as tyrewarmers are known from EP 1 130 947 A, DE 4019447 A1 and JP 04 124 794 U.

Such devices are provided with a body that may be wrapped up on the tyre provided with a resistor suitable for warming it and with a temperature sensor generally applied to the tread.

The temperature sensor is usually connected to a switch that cuts or enables the electrical supply of the resistor respectively upon reaching an upper limit or a lower limit by the temperature detected by the sensor.

So, once the tyrewarmer is activated, the temperature of the tyre it is wrapped to, detected by the sensor, is brought and kept between such upper and lower limits.

A tyrewarmer activity indicator indicates to the user whether the temperature detected has reached or not the range comprised within the preset limits, that is, if the tyre is ready for use or not.

A disadvantage of such device consists in the fact that the temperature detected by the sensor, since this is generally applied to the tread, is substantially the temperature at which the outer tyre surface is, whereas the temperature of the inner tyre face, that of the gas contained thereby and that of the support rim thereof, may be different.

Particularly if a tyre is used during a race while its temperature is not even, exhibiting instead a gradient along the tyre thickness, the performance as well as the life of the latter are impaired, to the disadvantage of the vehicle performance and the driver's safety.

In the field of motor-cycling and motor-racing, in particular, the need for a tyrewarmer is therefore felt, which should be capable of indicating to the user when the entire thickness of the tyre reaches the preset temperature.

Disclosure of the invention

The purpose of the present invention therefore is to eliminate the disadvantages of the prior art mentioned above by providing a tyrewarmer, in particular for tyres to be used in motor-cycling and motor-racing, which should allow checking when the entire thickness of the tyre reaches the preset temperature.

Within such purpose, a further object of the invention is to provide a tyrewarmer which should allow setting and controlling the pressure of the gas contained by the tyre.

Within such purpose, a further object of the finding is to provide a tyrewarmer which should allow setting and maintaining the pressure of the gas contained by the tyre.

Another object of the invention is to propose a tyrewarmer structurally simple and easy to use, which may be manufactured at low cost.

Brief description of the drawings

The technical features of the invention, according to the above objects, are clearly found in the contents of the claims below and the advantages of the same will appear more clearly from the following detailed description, made with reference to the annexed drawings, which show one or more purely exemplifying and non-limiting embodiments thereof, wherein:
- figure 1 shows a perspective view of a tyrewarmer according to a preferred embodiment of the invention;
- figure 2 shows a diagram of the tyrewarmer illustrated in Figure 1;
- figure 3 shows a logical flow diagram relating to the operation of the tyrewarmer according to a first particular embodiment of the invention;
- figure 4 shows a simplified graph of the temporal course of temperature and pressure inside the tyre during the use of a tyrewarmer according to the invention, in accordance with the particular embodiment illustrated in the diagram of figure 3;
- figure 5 shows a logical flow diagram relating to the operation of the tyrewarmer according to a second particular embodiment of the invention;
- figure 6 shows a simplified graph of the temporal course of temperature and pressure inside the tyre during the use of a tyrewarmer according to the invention, in accordance with the particular embodiment illustrated in the diagram of figure 5;
- figure 7 shows a logical flow diagram relating to the operation of the tyrewarmer according to a third particular embodiment of the invention;

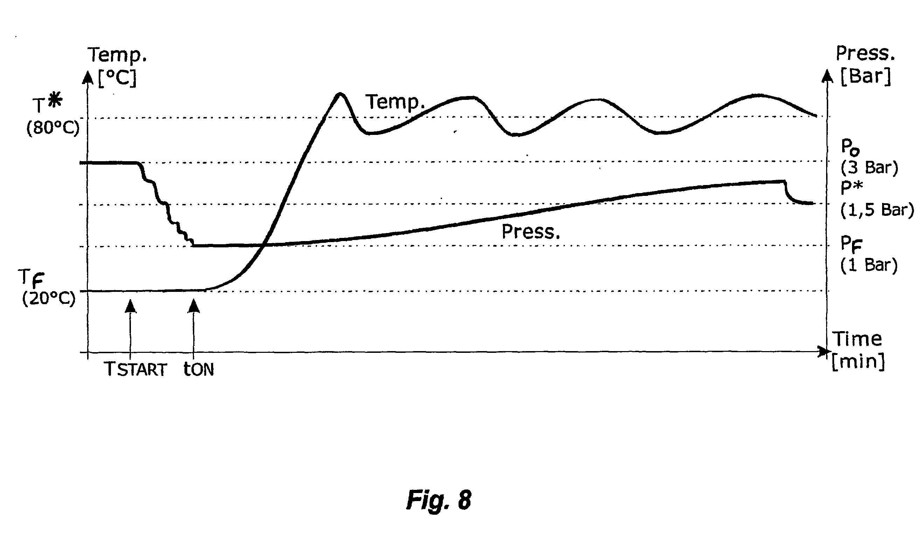

- figure 8 shows a simplified diagram of the temporal course of temperature and pressure inside the tyre during the use of a tyrewarmer according to the invention, in accordance with the particular embodiment illustrated in the diagram of figure 7;
- figures 9 and 10 show two graphs relating to two different ways of warming the tyre using the tyrewarmer according to the invention; and
- figure 11 shows a graph relating to the pressure course during a tyre deflation process.

Detailed description

With reference to the above figures, reference numeral 10 globally indicates a tyrewarmer, in particular for tyres to be used in motor-cycling and motor-racing, according to the invention.

According to a general solution of the invention, tyrewarmer 10 comprises a body 11, wrappable around wheel 12 at tyre 13. In turn, body 11 seats a resistor 14 for warming tyre 13 connected to power supply means 15.

Preferably, body 11 comprises a heating panel, an insulating layer and an external cover, overlapped to one another.

More in detail, the heating panel has a sandwich structure, with a first layer and a second layer enclosing a core. The first layer, intended for contacting the tyre, is composed of a fire retardant, non-sticking, abrasion-proof material and is provided with high capacity of diffusion of the temperature. This first layer may be made, for example, using a metal fibre and polyester and/or polyamide (nylon) fibre fabric. The central layer (core) defines the resistor and is preferably, but not necessarily, composed of one or more filaments of carbon fibres covered with a thermo-conductive silicone layer. The resistor may also be made of other materials, for example one or more copper or constantan wires covered with Teflon. Filaments and wires are arranged so as to cover all the surface intended for resting on the tread so as to have an even distribution of the temperature during heating. The second layer serves as support for the resistor and is made of a fire retardant non-woven fabric (for example felt) that also serves as insulator.

The insulating layer is made of a single layer, for example felt, whereas the outer covering layer is made of a fabric or a non-woven fabric, preferably plasticized (polyurethane or PVC) or subject to other oil-water repellent treatmemts.

The electrical supply means 15 are actuable by a control device 16 connected to a temperature sensor 17 associable to wheel 12 for detecting the tyre temperature.

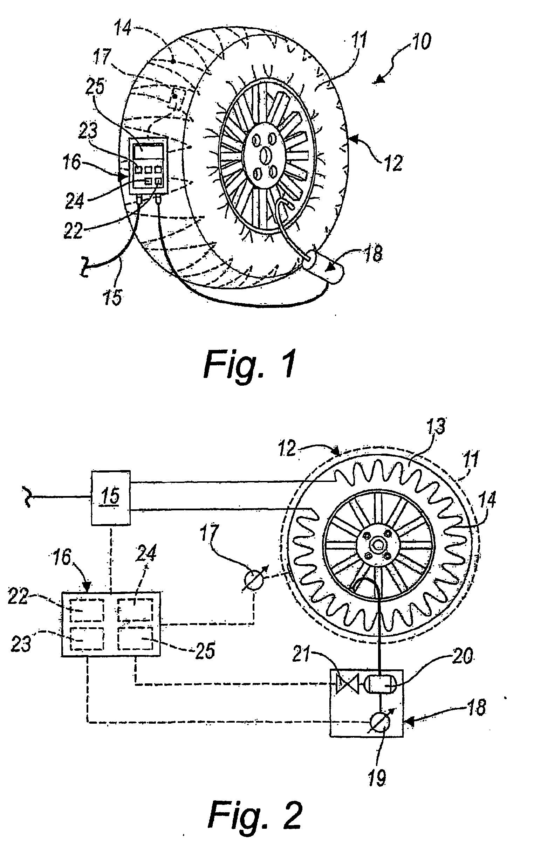

According to a first embodiment of the invention, illustrated in Figures 1 and 2, the temperature sensor 17 is of the type associable to the tread of tyre 13.

More in detail, sensor 17 is arranged within tyrewarmer 10 so that with the tyrewarmer mounted on the wheel, the sensor has its sensitive portion in contact, either direct or indirect, with the tread and can thus detect the surface temperature of the tyre itself.

The solution described above, simple to make and immediately applicable on the field, allows detecting only the surface temperature of the tyre tread.

According to a second embodiment of the invention, not illustrated in the annexed figures, the temperature sensor is of the type to be buried in tyre 13.

This solution allows having a more reliable estimate of the inside temperature of the tyre wall. However, its adoption requires a series of operating difficulties since it is necessary to involve the tyre manufacturer.

According to a third embodiment of the invention, not illustrated in the annexed figures, the temperature sensor is of the type associable to the rim of wheel 12.

More in detail, the sensor is attached to the rim in such position as to allow detecting the temperature of the set given by tyre, inflation gas and rim and thus, the temperature of the tyre inflation gas.

This solution is operatively easy to apply but requires a more complex data processing to estimate the tyre temperature.

According to a peculiar aspect of the invention, the tyrewarmer may comprise a regulating device 18 of the pressure of gas contained in tyre 13.

Advantageously, the regulating device 18 of the gas pressure in turn comprises a device for detecting the pressure of gas contained by tyre 13.

As will be explained in detail hereinafter, knowing the inflation pressure value P of the tyre allows estimating temperature T of the tyre inflation gas and thus, indirectly, the inner temperature of the wall of the tyre itself.

More in detail, taken the tyre deformability as negligible (at least within the limits of a standard use of the tyre) and therefore the inner tyre volume as constant, the gas behaviour inside the tyre may be considered as described by isochor transformations.

Taking an ideal behaviour of the gas, according to the second law of Gay-Lussac it is thus possible to consider the ratio P/T between pressure and temperature inside the tyre as constant. Therefore, as the gas temperature T increases, also the inside pressure P of the tyre increases in a directly proportional manner.

As a consequence, measuring the pressure variations P over time it is possible to obtain an estimate of the variation of the gas temperature T and thus of the variation of the tyre inner surface temperature.

Disclosing what will be described in detail hereinafter, starting from the assumption made on the gas behaviour inside the tyre, the tyrewarmer according to the invention is preferably used assuming that following the heating action of the resistors, the tyre has reached even temperature conditions through all the wall thickness when a pressure gradient over time (hereinafter indicated as GP) close to zero is detected.

Advantageously the control device 16 of tyrewarmer 10 is thus set for actuating the electrical supply means 15 according to the pressure gradient over time GP detected inside tyre 13.

In particular, the control device 16 is set for considering a pressure gradient over time GP close to zero come as indicator of absence of thermal gradient in the tyre wall thickness.

According to a preferred embodiment of the invention, the pressure gradient over time GP is considered substantially close to zero when it is below 0.1 mbar/s, and even more preferably when it is below 0.040 mbar/s. Operatively, a threshold or limit value is set (hereinafter indicated as GPL) comprised within the range between about 0.035 mbar/s and about 0.040 mbar/s, preferably setting it equal to 0.037 mbar/s.

According to a preferred embodiment of the invention, illustrated in Figures 1 and 2, the pressure sensor 19 is connected to an external pressure chamber 20 connected to the tyre inflation valve.

More in detail, the pressure regulating device 18 comprises:

- a pressure chamber 20, connected to wheel 12 and suitable for receiving a portion of the gas contained therein;

- a device for detecting the pressure of the gas contained by said tyre, suitably consisting of a pressure sensor 19 (in se known), connected to the pressure chamber 20 for detecting the pressure of gas contained therein; and

- a deflation electrovalve 21, for example a solenoid valve, connected to the pressure chamber 20 for ejecting the gas contained therein on a command.

Operatively, as illustrated in Figure 2, the regulating device 18 is connected to the control device 16 by the pressure sensor 19 and by electrovalve 21 respectively for detecting and regulating the pressure of the gas contained in the pressure chamber 20.

As an alternative to the preferred solution described above, the pressure sensor may be connected directly to the inner chamber of the tyre so as to directly detect the inflation pressure, while the deflation electrovalve continues to be connected to the above pressure chamber.

More in detail, the pressure sensor may be of the type to be buried in the tyre structure or it may be attached to the wheel rim in such position as to allow detecting the tyre inflation gas pressure.

Preferably, in this case, the pressure regulating device comprises:

- a pressure chamber 20, connected to wheel 12 and suitable for receiving a portion of the gas contained therein;

- a device for detecting the pressure of the gas contained by the tyre, suitably consisting of a pressure sensor 19 (in se known), directly connected to the tyre inner chamber; and

- a deflation electrovalve 21, for example a solenoid valve, connected to the pressure chamber 20 for ejecting the gas contained therein on a command.

Operatively, the detection device is connected to the control device by the pressure sensor 19 for detecting the pressure of the gas contained in the tyre and by electrovalve 21 for regulating the pressure of the gas contained in the outer chamber 20.

Operatively, the temperature and pressure sensors must transmit the data detected to the control device.

Preferably, if sensors (pressure and/or temperature) are adopted, arranged externally to the wheel (i.e. not attached thereto), the connection with the control device is obtained by conductor wires. It is the case of a temperature sensor associable to the tread and of a pressure sensor connected to an external pressure chamber.

Preferably, if sensors (pressure and/or temperature) are adopted, arranged internally to the wheel (i.e. attached thereto), the connection with the control device is obtained by radio waves (wireless). It is the case of a temperature or pressure sensor to be buried in the tyre or attached to the rim.

More in detail, wireless connections may be selected among all those available, according to the communication protocols, such as: Rfid with active tags; transponder; Wi.Fi.; WiMAX; Bluetooth; and ZigBee.

Advantageously, the wireless connection may be adopted also with sensors arranged externally to the wheel, as an alternative to the conductor wires.

Preferably, the control device 16 comprises:

- a setting device 22, controllable by the user, for the inflation pressure and the heating temperature of tyre 13, of in se known type, such as an electronic circuit provided with button controls;

- a preselection device 23 for the heating speed of tyre 13, of in se known type, such as an electronic circuit provided with button controls;

- on/off means 24 of tyrewarmer 10, of in se known type, such as an electrical supply switch or an electronic circuit provided with button controls; and

- electronic means 25 for signalling the operating conditions of tyrewarmer 10, of in se known type and suitably comprising a screen for displaying temperature T detected by the temperature sensor 17, pressure P detected by the pressure sensor 19, heating temperature T* and inflation pressure P* or Pf set for tyre 13, by the setting means 24.

Herein and in the following description, the expression "heating temperature" (indicated with T*) means the final temperature whereat the tyre is thermostated thanks to the regulation of the resistor supply. Operatively, the value of T* is selected by the user based for example on the type of tyre, on the specific tyre manufacturer instructions, on the features of the track and on the environmental conditions (ambient temperature, track temperature, humidity, etc.).

The expression "cold temperature" (indicated with Tf) means the temperature whereat the tyre is prior to heating.

The expression "hot (inflation) pressure" (indicated with P*) means the final inner pressure of the tyre, that is, at the end of the heating. Operatively, the value of P* is selected by the user based for example on the type of tyre, on the specific tyre manufacturer instructions, on the features of the track and on the environmental conditions (ambient temperature, track temperature, humidity, etc.).

The expression "cold (inflation) pressure" (indicated with Pf) means the inner pressure of the tyre, before the heating begins.

Operatively, as will be explained hereinafter, according to some particular uses of tyrewarmer 10, cold pressure Pf should be such as to allow reaching the hot pressure P*, based on the heating degree (T* - Tf) to be imposed to the tyre.

The tyre is considered to be ready for use when temperature T is equal to T* in all the thickness of the wall of the tyre itself and the inner pressure is equal to P*. Choosing correct tyre inflation pressures and temperatures is fundamental for allowing using the tyre at the maximum performance in terms of grip, life and safety.

Preferably, resistor 14 inserted in the wrappable body 11 of the tyrewarmer is sized for allowing a suitable warming of the tyre, that is, such as to allow reaching temperatures up to 150 °C but without burning the tread rubber.

Advantageously, the control device 16, processing the data transmitted by the temperature sensor, can act on the resistor supply means so as to control the tyre warming process.

A first regulating mode that may be adopted is ON/OFF type.

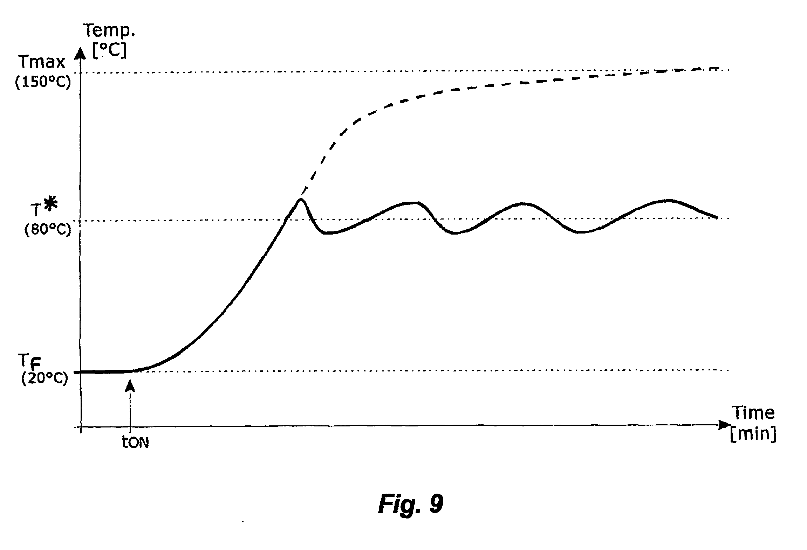

More in detail, the control device is provided with a switch or relay that connects or disconnects the resistor to/from the power supply. The graph of figure 9 shows an example of the typical course of the temperature detected by the temperature sensor with an ON/OFF control. In the specific example Tf is set equal to 20°C and T* to 80°C. Tmax (150 °C) indicates the maximum temperature the tyre would reach if there was no thermoregulation.

The dashed line shows the theoretical course of the temperature without thermoregulation, while the uninterrupted line curve shows the real course of the tyre tread temperature in the presence of thermoregulation.

The control device provides supply to the resistor at time tON. The temperature starts to increase. When the temperature detected by the sensor reaches the value T* the control device interrupts the supply. By thermal inertia the temperature continues to increase beyond the T* value and then drops below T*, a condition where the control device restarts the resistor power supply. The temperature continues to oscillate around the value of T* with increasingly smaller ranges.

In particular situations it may be necessary to slow down the tyre warming process.

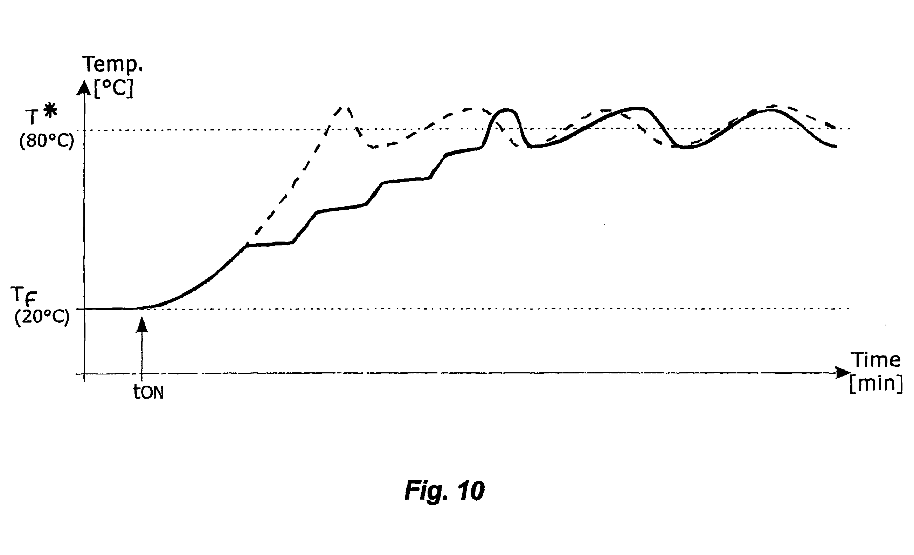

Advantageously, the control device can act on the warming speed assessing the temperature increase over time and comparing it with predefined values. If such values are exceeded, the power supply to the resistor is interrupted by a predefined time. In this case, the temperature course is shown, by way of an example, by the uninterrupted line of the graph of figure 10.

Different warming modes (programs), preset or programmable by the user as desired, may be provided. For example, a quick warming mode may have 4 °C/ min as predefined limit, a medium mode a limit of 2 °C/ min, and a slow mode a limit of 1 °C/ min. Such values may vary according to the features of the tyre and/or to the environmental conditions.

As an alternative to the ON/OFF regulating mode it is possible to provide for a regulating mode of the mean value of the resistor supply voltage.

More in detail, this control mode provides for the electronic regulation of the mean value of the resistor supply voltage. In this case it is possible to control the tyrewarmer power so as to obtain the desired temperature courses. The electronic power supply regulation may take place, for example, by phase choking, with an inverter or a variable voltage power supply.

Advantageously, the tyrewarmer according to the invention and the relative control device can operate in various manners according to the software program implemented and activated on the basis of the user requirements.

Three different alternative operating modes of tyrewarmer 10 according to the invention shall now be described.

As already mentioned before, the factors that affect the result of the tyre preparation (preheating before the use on track) are cold temperature Tf, which presumably matches the ambient temperature, and the quantity of air contained in the tyre (that is, the cold pressure Pf) when the warming cycle starts.

According to a first operating mode, the tyre is warmed keeping the inner tyre pressure constant to a preselected value of hot pressure P*.

More in detail, once body 11 of tyrewarmer 10 has been wrapped around tyre 13 of wheel 12, the user by setting means 22 of the control device, sets the temperature value T* at which the tyrewarmer should warm tyre 13. Likewise, the user sets the pressure value P* at which the tyrewarmer should keep tyre 13.

Moreover, by the preselection device 23, the user sets a preselected warming speed of tyre 13.

By the on/off means 24 the user activates the tyrewarmer.

The control device 16 then detects, by the pressure sensor 19, the value of pressure P of the gas contained in the pressure chamber 20, and thus indirectly, the pressure of the gas contained by tyre 13.

If P>P*, the control device 16 actuated electrovalve 21 allowing the ejection of a part of the gas contained in the pressure chamber 20 and by tyre 13; the control device 16 is suitably programmable for keeping the valve open for predefined times based on the difference between values P and P* (as will be specified hereinafter).

Otherwise, if it is not P>P*(that is, P≤P*), and if T<T*, then the control device 16 actuates the electrical supply means 15 of resistor 14 which warms up and warms tyre 13.

If neither P>P* or T<T*, then the control device 16 assesses whether the temporal gradient of the pressure detected by the pressure sensor 19, indicated with GP, is greater than as predefined value GPL.

In that case, that is if GP>GPL, the control device continues warming tyre 13, by the supply means 15, as well as the checks on the pressure value P.

Otherwise, that is if GP≤GPL, the control device interrupts the warming of tyre 13 and by the signalling means 25 indicates to the user that the warming of tyre 13 is completed and that the tyre is ready for use. If the tyre is not used immediately, the control device continues to actuate the resistors for thermostating the system to the temperature T* set.

In that case, in fact, the pressure detected by the pressure sensor 19 is substantially constant. This indicates a substantially constant temperature of the gas contained by tyre 13, that is, absence of warming of such gas, and thus that tyre 13 exhibits a temperature substantially even by all of the thickness thereof.

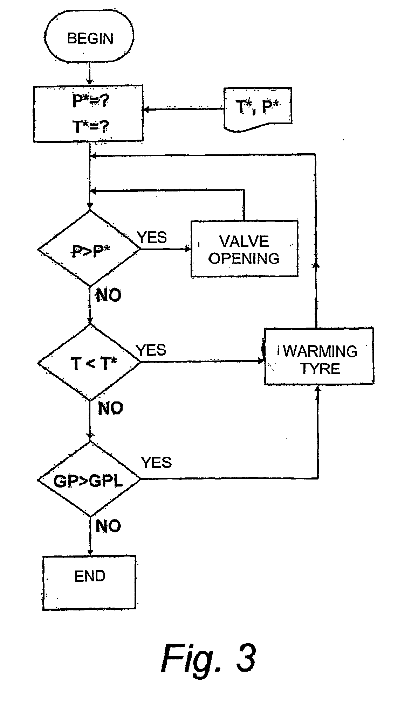

The logical diagram at the basis of the above first operating mode is shown in Figure 3.

More in detail, following the diagram of Figure 3, the user sets temperature T* at which the tyre must be warmed and the pressure P* that the gas contained into the same must have at the end of the heating.

First, the pressure value transmitted by the sensor is determined and if it is higher than P*, the deflation electrovalve is actuated (according to specific modes described hereinafter) until the value of P is below or equal to P*.

At this point, the value of temperature T is determined and if it is less than the desired value T*, the resistor supply is activated.

The program continues to repeat the previous points until the temperature value reaches T*, a condition that implies the disconnection of the resistor from the power supply.

During the warming, the pressure rises proportionally to the temperature increase.

Each time the temperature T reaches value T* and the supply to the resistors is interrupted, the temporal gradient GP of pressure is determined.

If the pressure gradient detected GP is higher than a preset limit value GPL it means that there is still a temperature gradient between the tyre tread and the support rim, that is, that the "tyre + gas + rim" system is not thermally steady yet. In this case, the program repeats all the previous points (assessment and regulation of pressure and temperature) continuing to provide heat to the wheel.

If the pressure gradient detected GP is less or equal to GPL it means that the system is at steady condition and thus the wheel is ready for use.

If the tyre is not used immediately, the tyrewarmer continues to thermostat the system to the temperature value T* set.

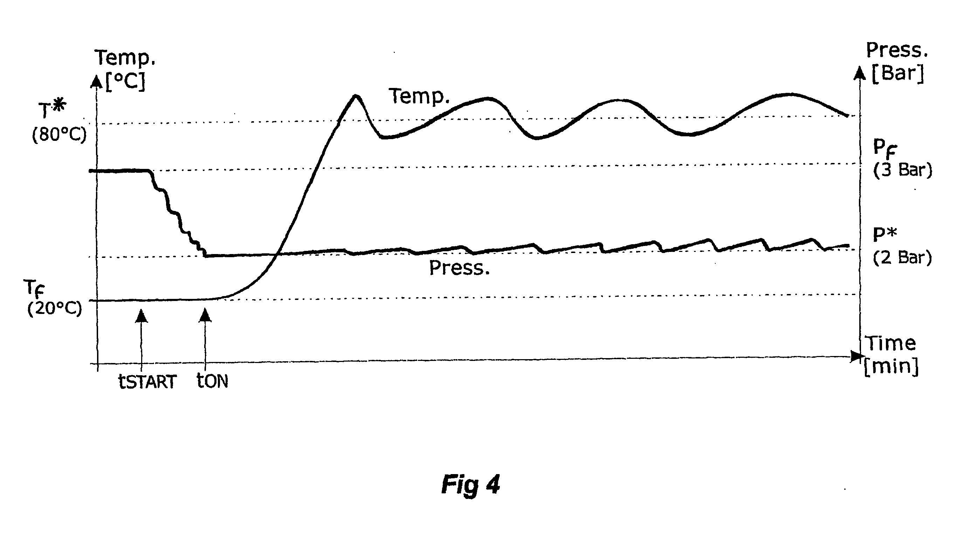

The graph of Figure 4 shows the overlapped time courses of pressure P and temperature T during the use of the tyrewarmer according to the above first operating mode. The numerical values indicated are purely by way of an example.

More in detail, it has been assumed that at first the tyre has an initial cold pressure Pf equal to 3 bar. The activation of the tyrewarmer takes place at the time indicated with tSTART. Before activating the supply of the resistor that takes place at the time indicated with tON, according to predefined modes described below, the tyre is deflated and brought to the hot pressure value set P*=2Bar. If pressure P is below P* the system will give an error signal and the tyre shall have to be inflated.

Once the cold pressure has been brought to the value of P*, at time tON the resistor starts transferring heat to the tread of the tyre and the temperature begins to slowly rise. When the temperature reaches the value T*=80°C the thermostating begins.

The system is characterised by an appreciable thermal inertia. As a consequence, while the resistor is disconnected from the supply, the temperature continues to rise beyond the value T* (over-elongation) for some moments more to then drop by the effect of cooling. The resistor is supplied again when the temperature drops below T*. A hysteresis of few °C around T* is thus noted, which decreases as time passes and the system approaches the operating conditions.

The contribution of heat causes the gradual heating of the gas contained in the tyre, causing a progressive increase of pressure P. The control device detects the instant value of pressure at regular intervals and records the variations, that is gradient GP. It is noted that the deflation is actuated periodically to keep the pressure value to value P*. As the system approaches the operating conditions, the pressure tends to oscillate increasingly less until the GP is less than GPL, a condition that determines the completion of the tyre preparation.

According to a second operating mode, the tyre is warmed letting the inner tyre pressure P vary according to the course imposed by the tyre warming.

Unlike the first operating mode, the pressure regulation is carried out only at the beginning of the process, before starting the warming. Basing on his/her experience, the user must set a cold pressure value Pf such that at the end of the warming process (T* - Tf), with thermally steady system, the final hot pressure actually is the desired one P*, or at most slightly higher for optionally allowing manual adjustment.

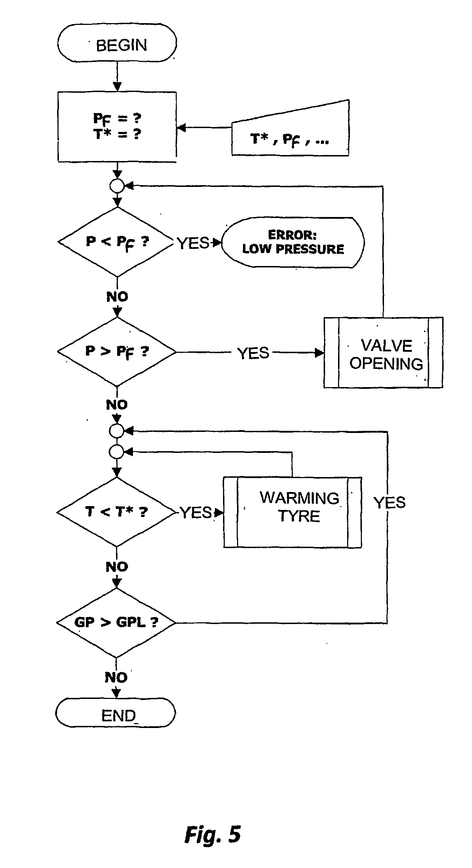

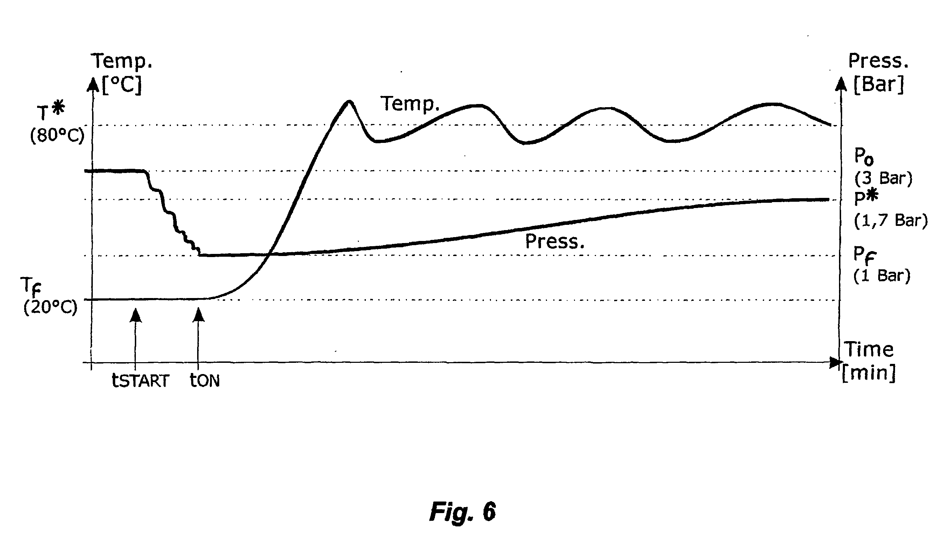

The logical diagram at the basis of this second operating mode is shown in Figure 5, while the graph of Figure 6 shows the overlapped time courses of pressure and temperature during the use of the tyrewarmer. The numerical values indicated are purely by way of an example.

In the example described by the diagram of figure 6, a value of 80°C has been set for T* and a value of 1.7 bar for P*. It has been assumed to detect a cold temperature Tf equal to 20°C. A warming from 20°C to 80°C thus being established, assuming an isochor transformation ( P=Po (1 + aT), with α= 1/273,15 [°C]⁻¹, expansion coefficient of perfect gases, Po pressure at T=0°C), the cold pressure must be equal to about 0.83 bar. The Pf is set to about 1 bar for precaution reasons.

According to a third operating mode, similar to the second operating mode, the tyre is warmed letting the inner tyre pressure P vary according to the course imposed by the tyre warming.

In this case, the control device is programmed so that it automatically proceeds to the calculation of cold pressure, based on the detected value of cold temperature Tf and on the values set by the user for pressure P* and temperature T*.

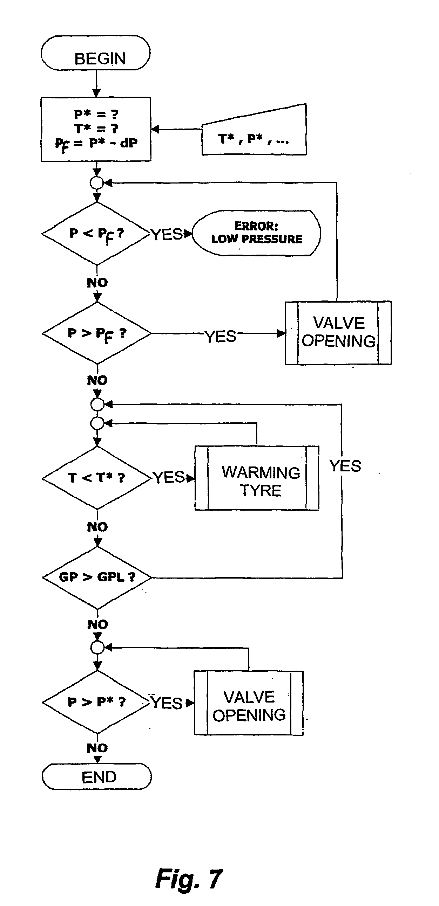

The logical diagram at the basis of this third operating mode is shown in Figure 7, while the graph of Figure 9 shows the overlapped time courses of pressure and temperature during the use of the tyrewarmer. The numerical values indicated are purely by way of an example.

More in detail, following the diagram of Figure 7, the user sets the hot temperature T* and the hot pressure P*. The control device calculates the value of cold pressure Pf based on the values set P* and T* and on the cold temperature value Tf detected by the temperature sensor.

First, the pressure value P transmitted by the sensor is determined and if it is higher than Pf, the deflation electrovalve is actuated (according to specific modes described hereinafter) until the value of P is equal to P*. If P is less than Pf the device signals an error and the tyre must be inflated.

When pressure P is equal to Pf, the value of temperature T is determined and, if it is less than the desired value T*, the resistor supply is activated. The program continues to control the temperature and to continue warming until the temperature T detected is equal or higher than T*.

Each time the temperature T reaches or exceeds value T* the electrical supply to the resistors is interrupted, the temporal gradient GP of pressure is determined.

If the pressure gradient detected GP is higher than a preset limit value GPL it means that there is still a temperature gradient between the tyre tread and the support rim, that is, that the "tyre + gas + rim" system is not thermally steady yet. In this case, the program checks the temperature T again.

Interrupting the heating allows the temperature to drop. The control cycle of T and of GP is repeated until T is less than T* again. The electrical supply to the resistors is then reactivated and the warming is resumed.

If the pressure gradient detected GP is less or equal to GPL it means that the system is at steady condition.

At this point the system checks the inner pressure P value, comparing it to the set value of hot pressure P*.

If P is higher than P*, the deflation electrovalve is actuated (according to specific methods described hereinafter) until the value of P is equal to P*.

At this point, the control device signals that the wheel is ready for use. If the tyre is not used immediately, the tyrewarmer continues to thermostat the system to the temperature value T* set.

As already mentioned before, the cold pressure value Pf is calculated with a certain margin so as to ensure in any case that the desired hot pressure P* is reached (and possibly exceeded) at the end of the heating. When the pressure gradient GP drops below the preset value GPL, the heating can be deemed as completed and the preparation of the tyre ends with the final deflation to the value P* (if this is required).

To avoid variability of racing tyre performance, it is essential to prepare the tyre in repeatable conditions suitably managing the heating based on pressure P* and on hot temperature T*. From this point of view it is preferable to use tyrewarmer 10 according to the invention following the second and third operating mode.

As already mentioned before, the tyre deflation by electrovalve may be carried out (both initially, to bring pressure to Pf, and at the end to reach the hot pressure P*) in various manners, which differ by speed and accuracy of the operation and are affected by the pressure sensor position.

If the pressure sensor is mounted connected to the pressure chamber 20 of the pressure regulating device, where there is also the deflation electrovalve, there occurs the inconvenience that when the electrovalve is actuated for bleeding the gas and thus acts opening a channel towards the exterior, the chamber pressure value drops to the ambient pressure value for all the time the electrovalve remains open. In these moments, therefore, it is not possible to obtain a readout of the pressure value of the tyre from the sensor.

To deflate the tyre from an initial value P0 to a final value P1 (Pf or P*) it is therefore necessary to proceed gradually, actuating the electrovalve by a predetermined time range and checking at each operation the value taken by the pressure after the partial deflation.

The electrovalve opening times substantially depend on the following parameters: inner tyre volume; inner pressure; electrovalve bleeding flow.

On the contrary, when the pressure sensor is positioned inside the tyre, a continuous reading of the pressure can be obtained even when the electrovalve is actuated. In this case, therefore, the deflation is an operation more easily controllable by the control device.

Advantageously, in particular in the case of pressure sensor connected to an external pressure chamber, two different deflation modes may be adopted: at predefined values and adaptive.

More in detail, defining ΔP as the difference between initial pressure P0 and final pressure P1 (ΔP=P0-P1) the mode at predefined values envisages that for different ranges of the ΔP value, different opening times are defined for the electrovalve. The higher the ΔP value, the higher the opening time. The table below shows some exemplifying values:

| **Value of ΔP [Bar]** | **Electrovalve opening time [s]** |
|---|---|
| ΔP ≥ 2 | 5 |
| 2 > ΔP ≥ 1 | 2 |
| 1 > ΔP ≥ 0.5 | 1 |
| 0.5 > ΔP ≥ 0.1 | 0.5 |
| 0.1 > ΔP ≥ 0.05 | 0.2 |

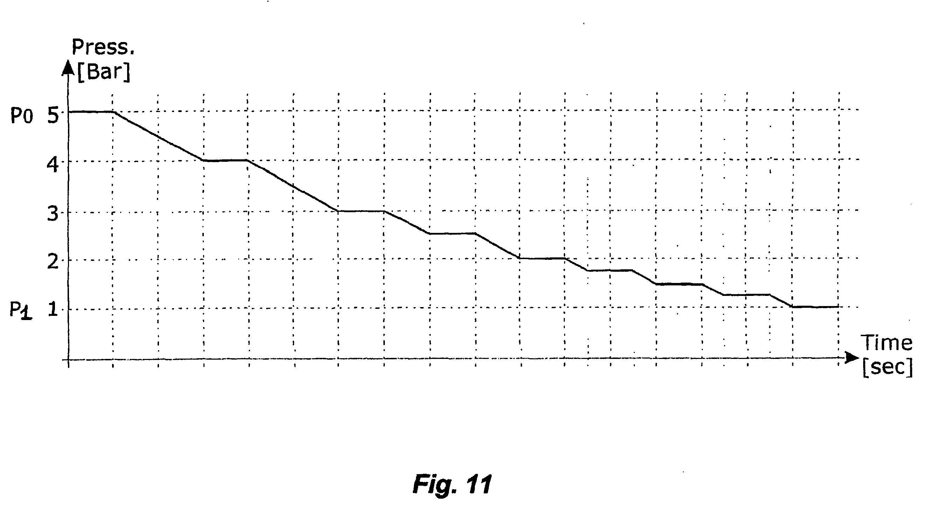

The greater the number of partial deflation steps (intervals of determination of ΔP), the higher will be the precision of the final pressure value Pf. The garph of figure 11 shows the tyre pressure course following a deflation at predefined values.

Considering that after closing the electrovalve it is necessary to wait for a settling time (even 10 seconds) before measuring the pressure, the time for the deflation operation according to the method at predefined values may require even considerable times. A 3 step system has proved to be sufficiently reliable and accurate and quite fast.

Another limit of the mode just described is related to the fact that the electrovalve opening times must be set based on the tyre size and the inner gas volume. In fact, as the tyre size decreases, considering the gas volume reduction, the electrovalve opening times must be decreased suitably to ensure adequate deflation accuracy. This implies the need of providing for differentiated settings according to the tyre sizes, to the disadvantage of the system convenience and flexibility.

To solve the above limits at least partly, the adaptive deflation mode may be used.

More in detail, this method provides for a first deflation step wherein the electrovalve is kept open by a first predefined time (e.g. 1 sec), selected so that the pressure does not drop below Pf or P*. This first step allows calibrating the system obtaining data for setting the electrovalve opening time of the next step.

Indicating with P0 the pressure value prior to deflation, with P1 the pressure value at the end of the first deflation step, with dP the difference between P0 and P1 (dP=P0-P1) and dt the electrovalve opening time in the passage from P0 to P1, the dt value of the next step is obtained based on considerations of proportionality and assessment of the errors on the effective value P1 compared to the expected one Pf or P*. This mode allows minimising the number of steps and thus the overall deflation time.

In conjunction or separately from the above description, a further object of the present invention is a method for warming tyres, in particular tyres to be used in motor-cycling and motor-racing.

According to a general embodiment, the method comprises the following steps:
- providing electrical resistor means wrappable around a tyre;
- providing means for detecting the inner pressure P of the tyre;
- providing means for detecting the temperature T of the tyre;
- setting the final warming temperature T* of the tyre;
- warming the tyre by the electrical resistor means, regulating the activation and deactivation of the latter so as to thermostat the temperature of the tyre at the predefined warming temperature T*;
- once reached the preset temperature value T*, determining the inner pressure gradient over time GP of the tyre; and
- taking as thermal gradient absence indicator in the tyre wall thickness an inner pressure gradient over time GP close to zero.

Preferably, the method comprises a step of providing means for regulating the inner pressure P of the tyre.

According to a first particular embodiment, the method further comprises the following steps:
- setting a value of the hot inner pressure P* of the tyre; and
- actuating the regulating means for keeping the inner pressure P about equal to the preset value of hot pressure P*.

Preferably, according to the above first embodiment, the method also comprises a step of regulating the cold pressure Pf of the tyre to a value not below the preset hot pressure value P*.

According to a second embodiment, the method further comprises the following steps:
- setting a value of the hot inner pressure P* of the tyre;
- detecting the cold temperature Tf of the tyre;
- calculating the cold inflation pressure Pf based on the detected value of cold temperature Tf and of the preset temperature T* and hot pressure P* values of the tyre;
- actuating the regulating means of the inner pressure for bringing the inner pressure P of the wheel to the cold pressure Pf before starting the warming step.

In the practice it has been noted that the invention achieves the task and the objects by providing a tyrewarmer capable of indicating to the user when the entire thickness of the tyre reaches the preset temperature and that further allows setting and regulating the pressure of the gas contained by the tyre.

## Claims

1. Tyrewarmer, in particular for tyres to be used in motor-cycling and motor-racing, comprising a body (11) wrappable to the wheel (12) at the tyre (13) and seating a resistor (14) for warming said tyre (13), connected to electrical supply means (15) actuable by a control device (16) connected to a temperature sensor (17) associable to said wheel (12) for detecting the temperature of said tyre (13), **characterised in that** it comprises a regulating device (18) of the pressure of gas contained by said tyre (13).

2. Tyrewarmer according to one or more of the previous claims, wherein said control device (16) is set for actuating said electrical supply means (15) according to the pressure gradient over time (GP) detected inside said tyre (13).

3. Tyrewarmer according to one or more of the previous claims, wherein said control device (16) is set for considering a pressure gradient over time (GP) close to zero as indicator of absence of thermal gradient in the wall thickness of said tyre.

4. Tyrewarmer according to one or more of the previous claims, wherein a pressure gradient (GP) is considered substantially close to zero when it is below 0.1 mbar/s, and preferably when it is below 0.040 mbar/s.

5. Tyrewarmer according to one or more of the previous claims, **characterised in that** said regulating device (18) comprises a device for detecting the pressure of gas contained by said tyre (13).

6. Tyrewarmer according to one or more of the previous claims, **characterised in that** said regulating device (18) comprises a pressure chamber (20), connected to said wheel (12) and suitable for seating part of the gas contained by said tyre (13), said detection device comprising a pressure sensor (19), connected to said pressure chamber (20) for detecting the pressure of the gas contained therein, said regulating device (18) comprising a deflation electrovalve (21) connected to said pressure chamber (20) for the on-command ejection of the gas contained in said pressure chamber (20).

7. Tyrewarmer according to one or more of the previous claims, **characterised in that** said detection device is connected to said control device (16) by said pressure sensor (19) and by said electrovalve (21) respectively for detecting and regulating the pressure of the gas contained in said pressure chamber (20).

8. Tyrewarmer according to one or more of claims 1 to 5, **characterised in that** said regulating device (18) comprises a pressure chamber (20), connected to said wheel (12) and suitable for seating part of the gas contained by said tyre (13), said detection device comprising a pressure sensor (19), connected directly to the inner chamber of said tyre (13) for detecting the pressure of the gas contained therein, said regulating device (18) comprising a deflation electrovalve (21) connected to said pressure chamber (20) for the on-command ejection of the gas contained therein.

9. Tyrewarmer according to claim 8, wherein said detection device is connected to said control device (16) by said pressure sensor (19) for detecting the pressure of the gas contained in said wheel (12) and by electrovalve (21) for regulating the pressure of the gas contained in said pressure chamber (20).

10. Tyrewarmer according to one or more of the previous claims, **characterised in that** said control device (16) comprises a setting device (22), controllable by the user, for the hot (P*) and/or cold (Pf) inflation pressure of said tyre (13) and of the warming temperature (T*) of said tyre (13).

11. Tyrewarmer according to claim 10, wherein said control device (16) is suitable for intervening on said electrovalve (21) for keeping the detected pressure value (P) to a preset value (P*) of said hot inflation pressure.

12. Tyrewarmer according to claim 10, wherein said control device (16) detects the cold temperature (Tf) of said tyre, and is suitable for calculating the cold inflation pressure (Pf) corresponding to the preset values of hot inflation pressure (P*) and of the warming temperature (T*) and is suitable for intervening on said electrovalve (21) for bringing the inner pressure (P) of said wheel to said cold pressure (Pf) before warming said tyre.

13. Tyrewarmer according to one or more of claims 1 to 9, **characterised in that** said control device (16) comprises a setting device (22), controllable by the user, for the cold (Pf) inflation pressure of said tyre (13) and of the warming temperature (T*) of said tyre (13) and is set for intervening on said electrovalve (21) for bringing the inner pressure (P) of said wheel to said preset value of cold pressure (Pf) before warming said tyre.

14. Method for warming tyres, in particular tyres to be used in motor-cycling and motor-racing, comprising the following steps:
- providing electrical resistor means wrappable around a tyre;
- providing means for detecting the inner pressure (P) of said tyre;
- providing means for detecting the temperature (T) of said tyre;
- setting the final warming temperature (T*) of said tyre;
- warming said tyre by said electrical resistor means, regulating the activation and deactivation of the latter so as to thermostat the temperature of said tyre at said predefined warming temperature (T*);
- once reached said preset temperature value (T*), determining the inner pressure gradient over time (GP) of said tyre; and
- taking as thermal gradient absence indicator in the tyre wall thickness an inner pressure gradient over time (GP) close to zero.

15. Method according to claim 14, comprising the step of providing means for regulating the inner pressure (P) of said tyre.

16. Method according to claim 15, comprising the step of:
- setting a value of hot inner pressure (P*) of said tyre;
- actuating said regulating means for keeping the inner pressure (P) about equal to said preset value of hot pressure (P*).

17. Method according to claim 16, comprising the step of inflating the tyre to a pressure (P) not below said predefined value of hot pressure (P*).

18. Method according to claim 15, comprising the step of:
- setting a value of hot inner pressure (P*) of said tyre;
- detecting the cold temperature (Tf) of said tyre;
- calculating the cold inflation pressure (Pf) based on the detected value of cold temperature (Tf) of said tyre and of the preset temperature (T*) and hot pressure (P*) values of said tyre;
- actuating said regulating means of the inner pressure for bringing the inner pressure (P) of said wheel to said cold pressure (Pf) before starting said warming step of said tyre.

## Patentansprüche

1. Reifenwärmer, insbesondere für Reifen, die für Motorräder und im Autorennsport verwendet werden, umfassend einen Körper (11), der im Bereich des Reifens (13) um ein Rad (12) legbar ist und einen Widerstand (14) zum Erwärmen des Reifens (13) aufweist, der mit Mitteln zur elektrischen Versorgung (15) verbunden ist, welche durch eine Steuervorrichtung (16) ansteuerbar ist, die mit einem dem mit dem Rad (12) zum Bestimmen der Temperatur des Reifens (13) zuzuordnenden Temperatursensor (17) verbunden ist, **dadurch gekennzeichnet, dass** er eine Reguliervorrichtung (18) für den Gasdruck in dem Reifen (13) umfasst.

2. Reifenwärmer gemäß einem oder mehreren der vorangehenden Ansprüche, wobei die Steuervorrichtung (16) zur Aktivierung der Mittel zur elektrischen Versorgung (15) in Abhängigkeit von dem Druckgradienten über die Zeit (GP), der in dem Reifen (13) gemessen wird, bestimmt ist.

3. Reifenwärmer gemäß einem oder mehreren der vorangehenden Ansprüche, wobei die Steuervorrichtung (16) derart vorgesehen ist, einen Druckgradienten über die Zeit (GP) nahe Null als Indikator für die Abwesenheit eines Wärmegradienten in der Wanddicke des Reifens anzunehmen.

4. Reifenwärmer gemäß einem oder mehreren der vorangehenden Ansprüche, wobei ein Druckgradient (GP) im Wesentlichen als nahe Null angenommen wird, wenn er unterhalb 0,1 mbar/s liegt und insbesondere, wenn er unterhalb 0,040 mbar/s liegt.

5. Reifenwärmer gemäß einem oder mehreren der vorangehenden Ansprüche, wobei die Reguliervorrichtung (18) eine Vorrichtung zum Bestimmen des Gasdrucks in dem Reifen (13) umfasst.

6. Reifenwärmer gemäß einem oder mehreren der vorangehenden Ansprüche, **dadurch gekennzeichnet, dass** die Reguliervorrichtung (18) eine Druckkammer (20) aufweist, die mit dem Rad (12) verbunden ist und zur Aufnahme eines Teils des Gases in dem Reifen (13), geeignet ist, wobei die Bestimmungsvorrichtung einen Drucksensor (19) umfasst, der mit der Druckkammer (20) zum Bestimmen des Gasdrucks verbunden ist, und wobei die Reguliervorrichtung (18) ein Ablasselektroventil (24) umfasst, das mit der Druckkammer (20) zum befehlsgesteuerten Ablassen des in der Druckkammer (20) enthaltenen Gases verbunden ist.

7. Reifenwärmer gemäß einem oder mehreren der vorangehenden Ansprüche, **dadurch gekennzeichnet, dass** die Bestimmungsvorrichtung zum Bestimmen und Regulieren des Drucks des Gases in der Druckkammer (20) mit der Steuervorrichtung (16) jeweils durch den Drucksensor (19) und durch das Elektroventil (21) verbunden ist.

8. Reifenwärmer gemäß einem oder mehreren der Ansprüche 1 bis 5, **dadurch gekennzeichnet, dass** die Reguliervorrichtung (18) eine Druckkammer (20) umfasst, die mit dem Rad (12) verbunden ist und zur Aufnahme eines Teils des Gases in dem Reifen (13) vorgesehen ist, wobei die Bestimmungsvorrichtung einen Drucksensor (19) umfasst, der direkt mit der Innenkammer des Reifens (13) zum Bestimmen des Gasdrucks in diesem verbunden ist, wobei die Reguliervorrichtung (18) ein Ablasselektroventil (21) umfasst, das mit der Druckkammer (20) zum befehlsgesteuerten Ablassen des Gases darin verbunden ist.

9. Reifenwärmer gemäß Anspruch 8, wobei die Bestimmungsvorrichtung mit der Steuervorrichtung (16) durch den Drucksensor (19) zum Bestimmen des Gasdrucks in dem Rad (12) und durch das Elektroventil (21) zum Regulieren des Drucks des Gases in der Druckkammer (20) verbunden ist.

10. Reifenwärmer gemäß einem oder mehreren der vorangehenden Ansprüche, **dadurch gekennzeichnet, dass** die Steuervorrichtung (16) eine Stellvorrichtung (22) für den heißen (P*) und/oder den kalten (Pf) Reifendruck (13) und der Erwärmungstemperatur (T*) des Reifens (13) umfasst, die durch den Nutzer einstellbar ist.

11. Reifenwärmer gemäß Anspruch 10, wobei die Steuervorrichtung (16) zur Beeinflussung des Elektroventils (21) zum Halten des ermittelten Druckwerts (P) auf einem voreingestellten Wert (P*) des heißen Reifendrucks geeignet ist.

12. Reifenwärmer gemäß Anspruch 10, wobei die Steuervorrichtung (16) die Kalttemperatur (Tf) des Reifens ermittelt und zur Berechung des kalten Reifendrucks (Pf) entsprechend den voreingestellter Werten des heißen Reifendrucks (P*) und der Erwärmungstemperatur (T*) und zur Beeinflussung des Elektroventils (21) geeignet ist, um den Innendruck (P) des Rades vor dem Erwärmen des Reifens auf die Kalttemperatur (Pf) zu führen.

13. Reifenwärmer gemäß einem oder mehreren der Ansprüche 1 bis 9, **dadurch gekennzeichnet, dass** die Steuervorrichtung (16) eine von einem Nutzer einstellbare Stellvorrichtung (22) für den kalten (Pf) Reifendruck des Reifens (13) und die Erwärmungstemperatur (T*) des Reifens (13) umfasst und zur Beeinflussung des Elektroventils (21) zur Führung des Innendrucks (P) des Rades vor dem Erwärmen des Reifens auf den vorbestimmten Wert des Kaltdrucks (Pf) vorgesehen ist.

14. Verfahren zum Erwärmen von Reifen, insbesondere Reifen, die bei Motorrädern und im Autorennsport verwendet werden, umfassend die folgenden Schritte:
- Bereitstellen elektrischer Widerstandsmittel, die um einen Reifen legbar sind,
- Bereitstellen von Bestimmungsmitteln für die Ermittlung des Innendrucks (P) des Reifens,
- Bereitstellen von Bestimmungsmitteln für die Ermittlung der Temperatur (T) des Reifens,
- Einstellen der Enderwärmungstemperatur (T*) des Reifens,
- Erwärmen des Reifens durch die elektrischen Widerstandsmittel, Kontrollieren des Anschaltens und Ausschaltens derselben, um die Temperatur des Reifens auf die vorbestimmte Erwärmungstemperatur (T*) zu führen,
- Bestimmen des Innendruckgradienten über die Zeit (GP) für den Reifen nach dem Erreichen des vorbestimmten Temperaturwerts (T*), und
- Annehmen eines Innendruckgradienten über die Zeit (GP) nahe Null als Indikator eines nicht existenten Wärmegradienten in der Reifenwanddicke.

15. Verfahren gemäß Anspruch 14 umfassend den Schritt des Bereitstellens von Mitteln zum Regulieren des Innendrucks (P) des Reifens.

16. Verfahren gemäß Anspruch 15 umfassend die Schritte
- Einstellen eines Werts des heißen Innendrucks (P*) des Reifens,
- Betätigen der Reguliermittel zum Aufrechterhalten des Innendrucks (P) ungefähr gleich dem vorbestimmten Wert des heißen Drucks (P*).

17. Verfahren gemäß Anspruch 16 umfassend den Schritt des Füllens des Reifens auf einen Druck (P) nicht unterhalb des vorbestimmten Werts des heißen Drucks (P*).

18. Verfahren gemäß Anspruch 15 umfassend die Schritte:
- Einstellen eines Werts des heißen Innendrucks (P*) des Reifens,
- Bestimmen der Kalttemperatur (Tf) des Reifens,
- Berechnen des kalten Reifendrucks (Pf), basierend auf dem festgestellten Wert der Kalttemperatur (Tf) des Reifens und der vorbestimmten Temperatur (T*) und des heißen Drucks (P*) des Reifens,
- Aktivierung der Reguliermittel des Innendrucks, um den Innendruck (P) des Rades vor dem Beginn des Erwärmens des Reifens auf den Kaltdruck (Pf) zu führen.

## Revendications

1. Couverture chauffante pour pneus, en particu-lier pour les pneus destinés à être utilisés pour la pratique du motocyclisme et du sport automobile, comprenant un corps (11) pouvant s'enrouler autour de la roue (12) au niveau du pneu (13) et logeant une résistance (14) pour chauffer ledit pneu (13) raccordée à des moyens d'alimentation électrique (15) pouvant être actionnés par un dispositif de commande (16) raccordé à un capteur de température (17) pouvant être associé à ladite roue (12) pour détecter la température dudit pneu (13), **caractérisée en ce qu'**elle comprend un dispositif de régulation (18) de la pression de gaz contenu par ledit pneu (3).

2. Couverture chauffante pour pneus selon une ou plusieurs des revendications précédentes, dans laquelle ledit dispositif de commande (16) est réglé pour actionner lesdits moyens d'alimenta-tion électrique (15) selon le gradient de pression avec le temps (GP) détecté à l'intérieur dudit pneu (13).

3. Couverture chauffante pour pneus selon une ou plusieurs des revendications précédentes, dans laquelle ledit dispositif de commande (16) est réglé pour prendre en considération un gradient de pression avec le temps (GP) proche de zéro en tant qu'indicateur d'absence de gradient ther-mique dans l'épaisseur de paroi dudit pneu.

4. Couverture chauffante pour pneus selon une ou plusieurs des revendications précédentes, dans laquelle un gradient de pression (GP) est consi-déré sensiblement proche de zéro lorsqu'il est inférieur à 0,1 mbar/s, et de préférence lors-qu'il est inférieur à 0,040 mbar/s.

5. Couverture chauffante pour pneus selon une ou plusieurs des revendications précédentes, **caracté-risée en ce que** ledit dispositif de régulation (18) comprend un dispositif pour détecter la pression du gaz contenu par ledit pneu (13).

6. Couverture chauffante pour pneus selon une ou plusieurs des revendications précédentes, **caracté-risée en ce** que ledit dispositif de régulation (18) comprend une chambre de pression (20), rac-cordée à ladite roue (12) et étant appropriée pour loger une partie du gaz contenu par ledit pneu (13), ledit dispositif de détection compre-nant un capteur de pression (19), raccordé à ladite chambre de pression (20) pour détecter la pression du gaz contenu à l'intérieur, ledit dispositif de régulation (18) comprenant une électro-vanne de dégonflage (21) raccordée à ladite chambre de pression (20) pour l'éjection sur commande du gaz contenu dans ladite chambre de pression (20).

7. Couverture chauffante pour pneus selon une ou plusieurs des revendications précédentes, **carac-térisée en ce que** ledit dispositif de détection est raccordé audit dispositif de commande (16) par ledit capteur de pression (19) et par ladite électrovanne (21) respectivement pour détecter et réguler la pression du gaz contenu dans ladite chambre de pression (20).

8. Couverture chauffante pour pneus selon une ou plusieurs des revendications 1 à 5, **caractérisée en ce que** ledit dispositif de régulation (18) comprend une chambre de pression (20) raccordée à ladite roue (12) et appropriée pour loger une partie du gaz contenu par ledit pneu (13), ledit dispositif de détection comprenant un capteur de pression (19), directement raccordé à la chambre interne dudit pneu (13) pour détecter la pression du gaz contenu à l'intérieur, ledit dispositif de régulation (18) comprenant une électrovanne de dégonflage (21) raccordée à ladite chambre de pression (20) pour l'éjection sur commande du gaz contenu à l'intérieur.

9. Couverture chauffante pour pneus selon la revendication 8, dans laquelle ledit dispositif de détection est raccordé audit dispositif de commande (16) par ledit capteur de pression (19) pour détecter la pression du gaz contenu dans ladite roue (12) et par l'électrovanne (21) pour réguler la pression du gaz contenu dans ladite chambre de pression (20).

10. Couverture chauffante pour pneus selon une ou plusieurs des revendications précédentes, **carac-térisée en ce que** ledit dispositif de commande (16) comprend un dispositif de réglage (22) pouvant être contrôlé par l'utilisateur, pour la pression de gonflage chaude (P*) et/ou froide (Pf) dudit pneu (13) et pour la température de chauffage (T*) dudit pneu (13).

11. Couverture chauffante pour pneus selon la revendication 10, dans laquelle ledit dispositif de commande (16) est approprié pour intervenir sur ladite électrovanne (21) afin de maintenir la valeur de pression détectée (P) à une valeur pré-déterminée (P*) de ladite pression de gonflage chaude.

12. Couverture chauffante pour pneus selon la revendication 10, dans laquelle ledit dispositif de commande (16) détecte la température froide (Tf) dudit pneu, et est approprié pour calculer la pression de gonflage froide (Pf) correspondant aux valeurs prédéterminées de la pression de gon-flage chaude (P*) et de la température de chauf-fage (T*) et est approprié pour intervenir sur ladite électrovanne (21) pour amener la pression interne (P) de ladite roue à ladite pression froide (Pf) avant le chauffage dudit pneu.

13. Couverture chauffante pour pneus selon une ou plusieurs des revendications 1 à 9, **caractérisée en ce que** ledit dispositif de commande (16) com-prend un dispositif de réglage (22), pouvant être commandé par l'utilisateur, pour la pression de gonflage froide (Pf) dudit pneu (13) et pour la température de chauffage (T*) dudit pneu (13) et est réglé pour intervenir sur ladite électrovanne (21) pour amener la pression interne (P) de ladite roue à ladite valeur prédéterminée de pres-sion froide (Pf) avant le chauffage dudit pneu.

14. Procédé pour chauffer des pneus, en particu-lier des pneus destinés à être utilisés pour la pratique du sport motocycliste et du sport automobile, comprenant les étapes suivantes consistant à :
- prévoir des moyens de résistance électrique pouvant s'enrouler autour d'un pneu ;
- prévoir des moyens pour détecter la pression interne (P) dudit pneu ;
- prévoir des moyens pour détecter la température (T) dudit pneu ;
- régler la température de chauffage finale (T*) dudit pneu ;
- chauffer ledit pneu avec lesdits moyens de résistance électrique, réguler l'activation et la désactivation de ces derniers afin de régler au thermostat la température dudit pneu à ladite température de chauffage (T*) prédéfinie ;
- une fois ladite valeur de température préréglée (T*) atteinte, déterminer le gradient de pression interne avec le temps (GP) dudit pneu ; et
- prendre en tant qu'indicateur d'absence de gradient thermique dans l'épaisseur de paroi du pneu, un gradient de pression interne avec le temps (GP) proche de zéro.

15. Procédé selon la revendication 14, comprenant l'étape consistant à prévoir des moyens pour réguler la pression interne (P) dudit pneu.

16. Procédé selon la revendication 15, comprenant les étapes consistant à :
- régler une valeur de pression interne chaude (P*) dudit pneu ;
- actionner lesdits moyens de régulation pour maintenir la pression interne (P) à peu près égale à ladite valeur prédéterminée de pression chaude (P*).

17. Procédé selon la revendication 16, comprenant l'étape consistant à gonfler le pneu à une pres-sion (P) non inférieure à ladite valeur prédé-finie de pression chaude (P*).

18. Procédé selon la revendication 15, comprenant les étapes consistant à :
- régler une valeur de pression interne chaude (P*) dudit pneu ;
- détecter la température froide (Tf) dudit pneu ;
- calculer la pression de gonflage froide (Pf) en fonction de la valeur détectée de température froide (Tf) dudit pneu et de la température prédéterminée (T*) et des valeurs de pression chaude (P*) dudit pneu ;
- actionner lesdits moyens de régulation de pression interne pour amener la pression interne (P) de ladite roue à ladite pression froide (Pf) avant de commencer ladite étape consistant à chauffer ledit pneu.
